**Europäisches Patentamt**

**European Patent Office**

**Office européen des brevets**

(19)

(11)　**EP 0 741 164 B1**

(12)　# EUROPEAN PATENT SPECIFICATION

(45) Date of publication and mention
of the grant of the patent:
**09.08.2000　Bulletin 2000/32**

(51) Int Cl.[7]: **C08L 23/16**, C08L 23/10,
C08L 53/00

(21) Application number: **96302970.7**

(22) Date of filing: **26.04.1996**

(54) **Thermoplastic resin composition**

Thermoplastische Harzzusammensetzung

Composition de résine thermoplastique

(84) Designated Contracting States:
**BE DE FR GB IT**

(30) Priority: **28.04.1995　JP 10676195**

(43) Date of publication of application:
**06.11.1996　Bulletin 1996/45**

(73) Proprietor: **SUMITOMO CHEMICAL COMPANY
LIMITED
Osaka-shi, Osaka 541-0041 (JP)**

(72) Inventors:
• **Sadatoshi, Hajime
Ichihara-shi, Chiba (JP)**

• **Suzuki, Haruyuki
Sodegaura-shi, Chiba (JP)**

(74) Representative: **Woods, Geoffrey Corlett et al
J.A. KEMP & CO.
Gray's Inn
14 South Square
London WC1R 5LX (GB)**

(56) References cited:
**EP-A- 0 437 096**　　　　**US-A- 5 338 801**

## EP 0 741 164 B1

**Description**

BACKGROUND OF THE INVENTION

Field of the Invention

The present invention relates to a thermoplastic resin composition. Particularly, the present invention relates to a thermoplastic resin composition comprising a polypropylene and an olefin copolymer rubber. This composition has superior mechanical properties such as flexural strength, thermal rigidity resistance and impact resistance and is suitably used for home electric parts, etc.

Prior Art

In recent years, a crystalline propylene-ethylene block copolymer has been used as forming materials such as home electric parts. This crystalline propylene-ethylene block copolymer has a balance among flexural modulus, heat distortion temperature and impact strength, but has a drawback such as insufficient impact strength at low temperature. It is disclosed in Japanese Patent Publication (Unexamined) Nos. Sho 53-22552(1983) and Sho 53-40045 (1983) to incorporate an ethylene-propylene copolymer rubber into the crystalline propylene-ethylene block copolymer for improving low-temperature impact strength. This composition, however, is inferior in flexural modulus and thermal properties such as heat distortion temperature because of addition of the ethylene-propylene copolymer rubber. For resolving this problem, it is disclosed in, for example, Japanese Patent Publication (Unexamined) Nos. Sho 51-136735 (1976) and Sho 53-64256(1978), Sho 53-64257(1978), Sho 57-55952(1982), Sho 57-207630(1982), Sho 58-17139 (1983), Sho 58-111846(1983), and Sho 59-98157(1984), and Japanese Patent Publication (Examined) No. Sho 55-3374(1980), to add an inorganic filler such as calcium carbonate, barium sulfate, mica, crystalline calcium silicate and talc.

Further, recently, in Japanese Patent Publication (Unexamined) Nos. Hei 5-59251(1993) and 5-230321(1993), there is proposed a resin composition improved in flexural modulus and surface hardness by rising isotactic pentad fraction of propylene homopolymer portion in an ethylene-propylene block copolymer. In Japanese Patent Publication (Examined) Nos. Sho 36-11240(1961), Sho 38-2126(1963) and Sho 41-21785(1966), it is proposed that impact resistance is improved by adding a vulcanized rubber to an olefinic plastics. However, as blending of the vulcanized rubber gives a reduced flowability resulting to easy occurrence of bad appearance, there is proposed in Japanese Patent Publication (Examined) Nos. Sho 56-15740(1981) and 56-15743(1981), a composition improved in a flowability by blending a mineral oil type softening agent and a peroxide non-crosslinking type rubbery material. Further, in Japanese Patent Publication (Unexamined) No. Hei 6-145437(1994), there is proposed a material having a good balance between impact strength and rigidity.

Co-pending European Patent Application No. 96106780.8 describes a thermoplastic resin composition with improved low temperature impact strength and rigidity against heat which comprises a propylene homopolymer and/or ethylene-propylene block copolymer. The composition differs from that of the present application described hereinafter in, inter alia, the melt index required for the homopolymer and/or copolymer.

But, recently, for use at highly thermal portion, improvement of home electric parts in thermal rigidity resistance has been required still more. However, in the conventional technic, there was a limitation in improvement of thermal rigidity resistance without damaging low-temperature impact resistance because low-temperature impact resistance and thermal rigidity resistance are antipodal properties each other.

SUMMARY OF THE INVENTION

An object of the present invention is to provide a thermoplastic resin composition improved in a low-temperature impact strength and thermal rigidity resistance by use of a specific polypropylene.

Another object of the present invention is to provide a thermoplastic resin composition moreover improved in a low-temperature impact strength and thermal rigidity resistance by blending an inorganic filler to the above-thermoplastic resin composition.

The present inventors have studied about an improvement of impact resistance and thermal rigidity resistance by dispersing an olefin copolymer rubber in a polypropylene. As the result, the present inventors found that the impact resistance and thermal rigidity resistance were improved at the same time by melt-mixing a specific polypropylene with a material obtained by dynamically heat-treating a mixture of a polypropylene and an olefin copolymer rubber in the presence of an organic peroxide and crosslinking adjuvant and achieved the present invention.

According to the present invention, there is a provided a thermoplastic resin composition obtainable by a process comprising mixing:

2

- a heat-treated material (1) obtainable by dynamically heat-treating a mixture of (A) from 10 to 50% by weight of a crystalline propylene homopolymer and/or a crystalline ethylene-propylene block copolymer, and (B) from 50 to 90% by weight of an olefin copolymer rubber (B) in the presence of an organic peroxide and a crosslinking agent, component (A) having a melt index of 0.5 to 10g/10min, measured according to JIS-K-6758 at 230°; the crystalline polymers having an isotactic pentad fraction of 0.90 or more or an isotactic pentad fraction of a propylene homopolymer portion of 0.90 or more; with

- (C) a crystalline propylene homopolymer and/or a crystalline ethylene-propylene block copolymer having a melt index measured according to JIS-K-6758 at 230°C of a propylene homopolymer portion of 30 to 150g/10min and an isotactic pentad fraction of the propylene homopolymer portion of 0.98 or more, wherein the final thermoplastic resin composition contains 10 to 40% by weight of the olefin copolymer rubber (B);

wherein the organic peroxide is present in an amount of from 0.01 to 1.0% by weight based on the total weight of the propylene homopolymer, the ethylene-propylene block copolymer (A) and the olefinic copolymer rubber (B); and wherein the crosslinking agent is present in an amount of from 0.01 to 5.0% by weight based on the total weight of the crystalline propylene homopolymer, the crystalline ethylene-propylene block copolymer (A) and the olefinic copolymer rubber (B).

There is also provided a thermoplastic composition obtainable by blending an inorganic filler into the thermoplastic resin composition.

The present invention is explained in detail below.

## DETAILED DESCRIPTION OF THE INVENTION

In the present invention, the crystalline propylene homopolymer (referred to simply as "propylene homopolymer" hereinafter) can be obtained by homopolymerizing propylene with a Ziegler-Natta catalyst system. In this specification, including the accompanying claims, unless otherwise specified a crystalline polymer is a polymer which has an isotactic pentad fraction of 0.90 or more or a polymer which has a propylene homopolymer portion having an isotactic pentad fraction of 0.90 or more. The crystalline ethylene-propylene block copolymer (referred to simply as "ethylene-propylene block copolymer" hereinafter) (A) typically has a propylene homopolymer portion as the first segment and propylene-ethylene random copolymer portion as the second segment and can be obtained by homopolymerizing propylene and subsequently random copolymerizing propylene and ethylene. In the present invention, these polymers can be used alone or as a mixture thereof.

A melt index measured according to JIS-K-6758 at 230°C of the polymer (A) described above is 0.5 to 10g/10min. and preferably 3 to 9 g/10min. The melt index of less than 0.5 g/10min. leads to bad appearance of a shaped article because of low flowability at molding. The melt index of more than 10 g/10min. leads to a decrease of mechanical property.

An ethylene content of the ethylene-propylene random copolymer portion in the ethylene-propylene block copolymer(A) preferably 20 to 70 % by weight and more preferably 25 to 60 % by weight.

In the ethylene-propylene block copolymer, a weight ratio (X) of propylene-ethylene random copolymer portion to the total block copolymer can be determined by measuring the quantity of heat of fusion of crystal of each the propylene homopolymer portion and the total block copolymer and calculating from the following equations:

$$X = 1 - (\Delta Hf)_T / (\Delta Hf)_P$$

$(\Delta Hf)_T$:Quantity of heat of fusion of the total block copolymer
$(\Delta Hf)_P$:Quantity of heat of fusion of the propylene homopolymer portion

An ethylene content can be determined according to a calibration curve method measuring each absorbance of characteristic absorption of methyl group and methylene group in IR spectrum of the block copolymer formed to a pressed sheet. The ethylene content of the ethylene-propylene copolymer portion can be determined by measuring the ethylene content of the total ethylene propylene block copolymer and calculating the following equation:

$$(C_2')_{EP} = (C_2')_T / X$$

$(C_2')_{EP}$:Ethylene content in the total block copolymer (% by wt). $(C_2')_T$:Ethylene content in the propylene-ethylene random copolymer portion (% by wt).

The olefinic copolymer rubber (B) used in the present invention is typically selected from an ethylene-$\alpha$-olefin

copolymer and an ethylene-α-olefin-non-conjugated polyene terpolymer. The α-olefin is typically propylene, butene-1 pentene-1, hexene-1, heptene-1 and octene-1 and among these, propylene and butene-1 are preferred.

The non-conjugated polyene typically has two or three double bonds.

As the non-conjugated polyene, for example, a straight or branched chain non-conjugated diene such as 1,4-hexadiene, 1,6-octadiene, a cyclic non-conjugated diene such as 1,4-cyclohexadiene, dicyclopentadiene, 5-vinyl-2-norbornene, 5-ethylidene-2-norbornene, a triene such as 2,3-diisopropylidene-5-norbornene, 2-ethylidene-3-isopropylidene-5-norbornene are illustrated and among them, 1,4-hexadiene, dicyclopentadiene and 5-ethylidene-2-norbornene are preferred. As the olefinic copolymer rubber (B), 2 or more of them are not prevented to be used.

The ethylene content of the olefinic copolymer rubber (B) is typically 90 to 40% by weight, an α-olefin content is typically 10 to 60% by weight and a non-conjugated diene content is typically 0 to 12% by weight. When the ethylene content exceeds 90% by weight, the ethylene component becomes much and therefore, a crystallinity appears in the copolymer rubber to decrease a low-temperature impact strength as a result. When it is less than 40% by weight,a decomposition reaction according to a peroxide is too apt to proceed and therefore, it causes a deterioration of a mechanical property and a bad appearance of a molded-article. An ethylene content is preferably 80 to 45% by weight. Besides, when a non-conjugated diene content exceeds 12% by weight, it becomes difficult to control a cross-linking reaction. The olefinic copolymer rubber (B) typically has a Mooney viscosity at 100°C (ML$_{1+4}$ 100°C) of 10 to 100 and preferably 20 to 80. When the Mooney viscosity at 100°C is less than 10, a mechanical property is inferior and when it exceeds 100, a flowability is inferior to cause a bad appearance of an injection-molded article.

The ratio of the olefinic copolymer rubber(B) in 100% by weight of the mixture of the propylene homopolymer and/or the ethylene-propylene block copolymer(A) and the olefinic copolymer rubber(B) is 50 to 90% by weight and preferably 60 to 80% by weight. When it is less than 50% by weight, a decomposition reaction according to a peroxide proceeds insufficiently and it is not achieved to improve a mechanical property. When it exceeds 90% by weight, a thermoplastic property hardly appears.

The examples of the organic peroxide used in the present invention include

2,5-dimethyl-2,5-di(t-butylperoxy)hexane,
2,5-dimethyl-2,5-di(t-butylperoxy)-3-hexyne,
1,3-bis(t-butylperoxyisopropyl)benzene,
1,1-di(t-butylperoxy)-3,5,5-trimethylcyclohexane,
2,5-dimethyl-2,5-di(peroxybenzoyl) -3-hexyne, and dicumylperoxide. There is particularly no restriction and it can be suitably selected according to a melt-kneading condition.

The added amount of the organic peroxide is selected as within the range of 0.01 to 1.0% by weight per 100% by weight of (A) + (B). When it is less than 0.01% by weight, an effect of the cross-linking reaction is little and when it exceeds 1.0% by weight, it is difficult to control the cross-linking reaction.

As the cross-linking agent used in the present invention, a bismaleimide such as, for example, N,N'-m-phenylene bismaleimide and toluylene bismaleimide, a multi-functional compound such as p-quinonedioxime, nitrobenzene, diphenylguanidine, trimethylolpropane and ethyleneglycol dimethacrylate and the like can be used. As N,N'-m-phenylene bismaleimide, for example, Sumifine BM(Registered Trade Mark)( manufactured by Sumitomo Chemical Company Ltd.) and HVA-2(manufactured by E.I.Du Pont de Nemours & Company Ltd.) can be used.

The added amount is selected as within the range of 0.01 to 5.0% by weight per 100% by weight of (A) + (B). When it is less than 0.01% by weight, the effect of the cross-linking reaction hardly appears and when it exceeds 5.0% by weight, a moldability is inferior. It is preferably 0.05 to 2.0% by weight.

The heat-treated article of the present invention (in some cases, referred to as "dynamic heat-treated article") is obtained by heat-treating dynamically the propylene homopolymer and/or the ethylene-propylene block copolymer (A) and the olefinic copolymer rubber(B) in the presence of the above-mentioned organic peroxide and the cross-linking agent.

As the method heat-treating dynamically in the present invention, a melt-kneading can be performed with a well-known apparatus for kneading such as a mixing roll, a Banbury mixer, a twin screw extruder, a kneader or a continuous mixer or the like at a temperature of 160 to 280°C. In this case, it is preferred to perform in an inert gas such as nitrogen and carbon dioxide.

In the present invention, it is preferred in the dynamic heat-treated article not to use a mineral oil softener used for the improvement of a flowability and an appearance in an usual thermoplastic elastomer. A mineral oil softener is not suitable to the object of the present invention owing to the deterioration of a rigidity and a thermal resistance.

The propylene homopolymer and/or the ethylene-propylene block copolymer (C) used for the present invention blended with the dynamic heat-treated article is a crystalline homopolymer of propylene (referred to simply as "homopolymer of propylene " hereinafter ), or a crystalline ethylene-propylene block copolymer (referred to simply as "ethylene-propylene block copolymer" hereinafter). The ethylene-propylene block copolymer is typically the one obtained by random copolymerization of ethylene and propylene after homopolymerizing propylene. These may be used alone or as a mixture thereof.

An ethylene content of an ethylene-propylene copolymer portion in the ethylene-propylene block copolymer (C) is typically 20 to 70% by weight and preferably 25 to 60% by weight. An isotactic pentad fraction of a propylene homopolymer portion is needed to be 0.98 or more. When it is less than 0.98, it is difficult to obtain a rigidity and a thermal resistance necessary for the object of the present invention.

A melt index of the propylene homopolymer portion is needed to be 30 to 150g/10min. When it is less than 30g/10min., a flowability is low and when it exceeds 150g/10min., it causes the deterioration of a mechanical property. Besides, a propylene homopolymer portion in the ethylene-propylene block copolymer (C) can be obtained by taking out from a polymerization vessel after homopolymerizing propylene at the polymerization. The propylene homopolymer portion means both the propylene homopolymer and the propylene homopolymer portion of the ethylene-propylene block copolymer (C).

An isotactic pentad fraction mentioned hereby is an isotactic chain in five monomer units of a crystalline polypropylene molecular chain measured by using a method published in Macromolecules, vol.6, 925(1973) by A. Zambelli et al, that is, $^{13}$C-NMR, and in other words, a propylene monomer unit ratio being the center of a chain wherein five propylene monomer units are meso-bonded successively. However, concerning an ascription of NMR absorption peak, it is to be performed in accordance with Macromolecules, Vol.8, 687(1975) published thereafter. In the concrete, an isotactic-pentad ratio is measured as an area ratio of a mmmm peak to total absorption peaks of $^{13}$C-NMR spectrum. An isotactic pentad ratio of CRM No. M19-14 Polypropylene PP/MWD/2 of NATIONAL PHYSICAL LABORATORY in U. K. measured according to this method was 0.944.

In the present invention,.concerning a method blending the heat-treated article, and the propylene homopolymer and/or ethylene-propylene block copolymer (C), they can also be melt-kneaded with a well-known kneading machine in like manner as the case of the forementioned dynamic heat-treated article. The melt-kneading may be divided into two steps and may be carried out using a multi-step feeding type biaxial melt-kneading machine in one step.

The content of the olefinic copolymer rubber (B) in the thermoplastic resin composition of the present invention thus obtained should be 10 to 40% by weight. When it is less than 10% by weight, a low-temperature impact strength is inferior and when it exceeds 40% by weight, a flowability is inferior to cause a bad appearance of a molded-article. It is preferably 12 to 30% by weight.

In the present invention, further, a rigidity and a thermal resistance can be improved by adding the inorganic fillers (D) to the above-mentioned thermoplastic resin composition comprising (A), (B) and (c). The added amount of the inorganic fillers (D) is 5 to 40% by weight to (A) to (D). When it is less than 5% by weight, an effect improving a rigidity and a thermal resistance is little and when it exceeds 40% by weight, a flowability deteriorates.

As the inorganic fillers (D) used, ones improving a rigidity and a thermal resistance may be good, and for example, calcium carbonate, barium sulfate, a mica, a crystalline calcium silicate, a talc and a glass fiber are illustrated. Particularly, a talc and a glass fiber are preferred.

As a talc, one having an average particle size of 1 to 5 μm is preferred. When the average particle size is less than 1 μm, problems such as a re-coagulation and a bad dispersion tend to appear. When the average particle size is more than 5 μm, an effect improving a rigidity and a thermal resistance tends to smaller degree. As a glass fiber, a chopped glass having a fiber diameter of 4 to 13 μm treated with a silane-coupling agent is preferably used.

In the present invention, the fore-mentioned kneading apparatus can be similarly used for blending the inorganic fillers (D) and a method blending (D) after obtaining the above-mentioned thermoplastic resin composition comprising (A) to (c) in advance, or a method blending (D) simultaneously when (C) is blended to the heat-treated article of (A) and (B) can be adopted. Usually, a method adding and blending simultaneously (C) and (D) to the heat-treated article of (A) and (B) is adopted.

Further, the thermoplastic resin composition relating to the present invention may contain thermal stabilizers, nucleating agents, ultra violet absorbers, lubricating agents, antistatic agents, flame retardants, pigments, dyes and other polymers so long as the object of the present invention is not damaged.

<u>EXAMPLES</u>

Examples of the present invention are illustrated as follows but the present invention is not limited thereto.

The measurement methods of physical properties in the Examples and the specification, including the claims, of the kneading apparatus are as follows:

(1) Melt index (MI) was performed according to a method prescribed in JIS-K-6758. A measurement temperature was 230°C and it was measured under a load of 2.16kg.

(2) Bending test was measured according to a method prescribed in JIS-K-7203. A test piece (a thickness of 6.4mm) molded by injection-molding was used and a flexural modulus was evaluated under conditions of span length of 100mm and a loading speed of 2.0mm/min.. A measurement temperature was 23°C.

(3) Izod impact strength was measured according to a method prescribed in JIS-K-7110. A test piece (a thickness of 6.4mm) molded by injection-molding was used and a notched impact strength of test piece notched after the molding was evaluated. A measurement temperature was 23°C unless remarking. In other case except the temperature, a measurement was performed after modulating a state for 2 hours in a constant temperature bath at a fixed temperature.

(4) Rockwell hardness

Rockwell hardness was measured according to a method prescribed in JIS-K-7202. A test piece (a thickness of 6.4mm) molded by injection-molding was used and evaluated by using a steel ball of R. A value was represented by a R scale.

(5) Heat distortion temperature

Heat distortion temperature was measured according to a method prescribed in JIS-K-7207. A test piece (a thickness of 6.4mm) molded by injection-molding was used and a temperature wherein the test piece formed a bending of 0.254mm when a temperature was elevated at a rate of 2°C/min. under a fiber stress of 4.6kgf/cm$^2$.

(6) Banbury mixer

MIXTRON BB-16 MIXER having 2 wings-type rotor and a chamber volume of 17.7 l manufactured by Kobe Steel Works Ltd. was used. Mixtron is a Trade Mark.

(7) Twin screw kneading extruder

TEX-44SS-30W-2V (a different-direction rotor type) having two screws of 44mm × 30L/D manufactured by Nippon Steel Works Ltd. was used.

In Examples and Comparative Examples illustrated as follows, various materials abbreviated in Tables 1 and 2, that is, the following ones are used.

PP:     Propylene homopolymer
BC:     Ethylene-propylene block copolymer rubber
EPR:    Ethylene-propylene copolymer rubber
EBR:    Ethylene-butene-1 copolymer rubber
EPDM:   Ethylene-propylene-non-conjugated diene terpolymer rubber
TALC:   Talc
PO:     Organic peroxide
            2,5-dimethyl-2,5-di(t-butylperoxy)hexane
BM:     Cross-linking agent
            N,N'-m-phenylene bismaleimide

Example 1

30% by weight of a propylene homopolymer (PP-1) having an isotactic pentad fraction of a propylene homopolymer portion of 0.97 and a melt index of 8g/10min. and 70% by weight of an ethylene-propylene-non-conjugated diene terpolymer rubber (EPDM-1) having a propylene content of 50% by weight, 5-ethylidene-2-norbornene of the non-conjugated diene of 5.3% by weight and a Mooney viscosity at 100°C of 43 were melt-kneaded in the presence of 0.04% by weight of 2,5-dimethyl-2,5-di(t-butylperoxy)hexane and 0.5% by weight of N,N'-m-phenylene bismaleimide with a Banbury mixer in an adiabatic state for 10 minutes and successively, passed through a roll to be pelletized with a sheet cutter (hereinafter, named as MB or MB pellets)(the first step).

Next, after 44% by weight of a propylene homopolymer (PP-3) having an isotactic pentad fraction of a propylene homopolymer portion of 0.98 and a melt index of 77g/10min., 36% by weight of an ethylene-propylene block copolymer (BC) having an ethylene-propylene copolymer portion content of 16.7% by weight and a melt index of 12g/10min. and 20% by weight of the MB pellets prepared in the first step were homogeneously blended with various kinds of stabilizers, they were pelletized with a twin-axial kneading extruder at 200°C (the second step) and test pieces were prepared with an injection-molding machine to be evaluated. MB and the compositions of homogeneous mixtures (compounds) were shown in Table 2 for reference. The results are shown in Table 4.

Examples 2 to 9

MB of the materials in Table 1 and the compositions in Table 2 were melt-kneaded with a Banbury mixer in an adiabatic state for 10 minutes and successively, passed through a roll to be pelletized with a sheet cutter and named as MB (the first step). The compounds of the compositions in Table 2 containing the MB pellets were pelletized with a twin-axial kneading extruder at 200°C (the second step) and test pieces were prepared with an injection-molding machine to be evaluated. The results are shown in Table 4.

Comparative Examples 1 to 5

Compounds of the materials in Table 1 and the compositions in Table 3 were pelletized in like manner as the second step of Example 1 and test pieces were prepared to be evaluated. The results are shown in Table 4.

Comparative Examples 6 to 12

Compounds of the materials in Table 1 and the compositions in Table 3 were pelletized in like manner as the second step of Example 1 and test pieces were prepared to be evaluated. The results are shown in Table 5 in combination with Examples 2 and 6 for reference.

Example 10 and Comparative Examples 13 and 14

MB of the materials in Table 1 and the compositions in Table 4 were melt-kneaded with a Banbury mixer in an adiabatic state for 10 minutes and successively, passed through a roll to be pelletized with a sheet cutter and named as MB(the first step). The compounds of the compositions in Table 4 containing the MB pellets were pelletized with a twin-axial kneading extruder at 200°C (the second step) and test pieces were prepared with an injection-molding machine to be evaluated. The results are shown in Table 6 in combination with Example 2 for reference.

Table 1

| Sample | | MI(230°C)(g/10min.) | | Isotactic pentad fraction | Ethylene-propylene copolymer portion | |
|---|---|---|---|---|---|---|
| | | Total | PP portion of BC | | Content 1 (wt%) | Content 2 (wt%) |
| Polypropylene | PP-1 | 8 | — | 0.97 | — | — |
| | PP-2 | 7 | — | 0.99 | — | — |
| | PP-3 | 77 | — | 0.98 | — | — |
| | PP-4 | 68 | — | 0.99 | — | — |
| | PP-5 | 30 | — | 0.98 | 16.7 | 36.5 |
| | BC | 12 | 35 | 0.98 (PP portion) | | |

| Sample | | ML$_{1+4}$ 100°C | α-olefin content | Nonconjugated diene content (wt%) |
|---|---|---|---|---|
| Rubber | EPR | 52 | 27(propylene) | — |
| | EBR | 48 | 17(butene-1) | — |
| | EPDM-1 | 43 | 50(propylene) | 5.3 (EN) |
| | EPDM-2 | 88 | 28(propylene) | 7.2 (EN) |

PP:Propylene homopolymer  BC:Ethylene-propylene block copolymer  EPR:Ethylene-propylene copolymer rubber  EBR:Ethylene-butene-1 copolymer rubber  EPDM:Ethylene-propyrene-nonconjugated terpolymer rubber  EN:5-Ethylidene-2-norbornene  Content 1:Content of ethylene propylene copolymer portion  Content 2:Ethylene content in ethylene propylene copolymer portion

EP 0 741 164 B1

Table 2

| | M B (wt%) | | | | | | | Compound (wt%) | | | | | | | | |
|---|---|---|---|---|---|---|---|---|---|---|---|---|---|---|---|---|
| | PP-1 | PP-2 | EPDM-1 | PIB | OIL | PO | BM | PP-3 | PP-4 | PP-5 | BC | MB | EPR | EBR | EPDM-2 | TALC |
| Example 1 | 30 | − | 70 | − | − | 0.04 | 0.5 | 44 | − | − | 36 | 20 | − | − | − | − |
| 2 | − | 30 | 70 | − | − | 0.04 | 0.5 | 44 | − | − | 36 | 20 | − | − | − | − |
| 3 | 30 | − | 70 | − | − | 0.02 | 0.4 | − | 49 | − | 30 | 21 | − | − | − | − |
| 4 | 30 | − | 70 | − | − | 0.02 | 0.4 | − | 29 | − | 30 | 21 | − | − | − | 20 |
| 5 | 30 | − | 70 | − | − | 0.02 | 0.5 | − | 24 | − | 36 | 20 | − | − | − | 20 |
| 6 | − | 30 | 70 | − | − | 0.04 | 0.5 | 24 | − | − | 36 | 20 | − | − | − | 20 |
| 7 | 30 | − | 70 | − | − | 0.02 | 0.4 | − | 29 | − | 30 | 21 | − | − | − | 20 |
| 8 | 30 | − | 70 | − | − | 0.04 | 0.5 | − | 29 | − | 30 | 21 | − | − | − | 20 |
| 9 | − | 30 | 70 | − | − | 0.04 | 0.5 | − | 24 | − | 36 | 20 | − | − | − | 20 |
| 10 | − | 30 | 70 | − | − | 0.2 | 0.5 | 44 | − | − | 36 | 20 | − | − | − | − |

TALC: Talc (JR-39 manufactured by Nihon Talc Co. Ltd.)

PIB : Polyisobutylene (Exxon Vistanex L-100) (Vistanex is a Trade Mark)

OIL : Parafinic process oil

PO : 2,5-dimethyl-2,5-di(t-butylperoxy)hexane

BM : N,N'-m-phenylene bismaleimide

EP 0 741 164 B1

Table 3

| | M B (wt%) | | | | | | | Compound (wt%) | | | | | | | | |
|---|---|---|---|---|---|---|---|---|---|---|---|---|---|---|---|---|
| | PP-1 | PP-2 | EPDM-1 | PIB | OIL | PO | BM | PP-3 | PP-4 | PP-5 | BC | MB | EPR | EBR | EPDM-2 | TALC |
| Comparative | | | | | | | | 50 | – | – | 36 | – | 14 | – | – | – |
| Example 1 | – | – | – | – | – | – | – | 50 | – | – | 36 | – | – | 14 | – | – |
| 2 | – | – | – | – | – | – | – | 50 | – | – | 36 | – | – | – | 14 | – |
| 3 | – | – | – | – | – | – | – | 42 | – | – | 22 | – | – | – | 16 | 20 |
| 4 | – | – | – | – | – | – | – | – | 42 | – | 22 | – | 6 | 8 | 2 | 20 |
| 5 | – | – | – | – | – | – | – | 38 | – | – | 36 | 26 | – | – | – | – |
| 6 | – | 23 | 54 | – | 23 | 0.04 | 0.5 | 41 | – | – | 36 | 23 | – | – | – | – |
| 7 | 15 | – | 54 | 8 | 23 | 0.3 | 0.5 | – | – | 71 | – | 29 | – | – | – | – |
| 8 | – | 30 | 70 | – | – | 0.04 | 0.5 | – | – | 68 | – | 32 | – | – | – | – |
| 9 | 15 | – | 54 | 8 | 23 | 0.3 | 0.5 | 24 | – | – | 36 | 20 | – | – | – | 20 |
| 10 | – | 23 | 54 | – | 23 | 0.04 | 0.5 | – | – | 51 | – | 29 | – | – | – | 20 |
| 11 | – | 30 | 70 | – | – | 0.04 | 0.5 | – | – | 48 | – | 32 | – | – | – | 20 |
| 12 | 15 | – | 54 | 8 | 23 | 0.3 | 0.5 | 44 | – | – | 36 | 20 | – | – | – | – |
| 13 | – | 30 | 70 | – | – | – | 0.5 | 44 | – | – | 36 | 20 | – | – | – | – |
| 14 | – | 30 | 70 | – | – | 0.01 | 0.5 | | | | | | | | | |

Table 4

| | M I | Specific gravity | Flexural modulus | Izod Impact 23℃ −30℃ | | HDT | Rockwell hardness |
|---|---|---|---|---|---|---|---|
| Unit | g/10min. | | kg/cm² | kg · cm/cm | | ℃ | R scale |
| Example 1 | 20 | 0.902 | 11500 | 17 | 4.6 | 114 | 80 |
| 2 | 20 | 0.902 | 11500 | 14 | 4.5 | 113 | 81 |
| 3 | 16 | 0.902 | 12100 | 12 | 4.1 | 115 | 83 |
| 4 | 8 | 1.034 | 22800 | 21 | 4.1 | 137 | 73 |
| 5 | 8 | 1.038 | 23500 | 27 | 4.1 | 141 | 73 |
| 6 | 11 | 1.035 | 23100 | 22 | 4.0 | 140 | 75 |
| 7 | 9 | 1.039 | 24200 | 21 | 3.8 | 141 | 74 |
| 8 | 9 | 1.036 | 22700 | 31 | 4.1 | 139 | 75 |
| 9 | 11 | 1.039 | 24200 | 24 | 3.7 | 142 | 77 |
| Comparative Example 1 | 26 | 0.900 | 12400 | 7.3 | 2.6 | 111 | 86 |
| 2 | 26 | 0.904 | 13400 | 6.8 | 2.0 | 116 | 89 |
| 3 | 25 | 0.902 | 13300 | 5.9 | 2.7 | 113 | 88 |
| 4 | 17 | 1.035 | 23500 | 7.6 | 2.9 | 137 | 78 |
| 5 | 19 | 1.040 | 26700 | 7.1 | 2.3 | 145 | 85 |

Table 5

| | M I | Specific gravity | Flexural modulus | Izod Impact 23℃ -30℃ | | HDT | Rockwell hardness |
|---|---|---|---|---|---|---|---|
| Unit | g/10min. | | kg/cm² | kg・cm/cm | | ℃ | R scale |
| Example 2 | 20 | 0.902 | 11500 | 14 | 4.5 | 113 | 81 |
| 6 | 11 | 1.035 | 23100 | 22 | 4.0 | 140 | 75 |
| Comparative Example 6 | 28 | 0.902 | 9700 | 12 | 3.3 | 107 | 89 |
| 7 | 28 | 0.902 | 10100 | 20 | 4.1 | 107 | 66 |
| 8 | 12 | 0.899 | 9300 | 17 | 4.4 | 108 | 63 |
| 9 | 20 | 0.900 | 7400 | 19 | 4.3 | 98 | 30 |
| 10 | 14 | 1.040 | 21000 | 13 | 3.0 | 134 | 66 |
| 11 | 8 | 1.034 | 20300 | 20 | 4.0 | 131 | 58 |
| 12 | 12 | 1.035 | 17900 | 25 | 4.2 | 121 | 25 |

EP 0 741 164 B1

Table 6

| Unit | M I g/10min. | Specific gravity | Flexural modulus kg/cm² | Izod Impact kg·cm/cm 23°C | Izod Impact kg·cm/cm −30°C | HDT °C | Rockwell hardness R scale |
|---|---|---|---|---|---|---|---|
| Example 2 | 20 | 0.902 | 11500 | 14 | 4.5 | 113 | 81 |
| Example 10 | 21 | 0.902 | 11500 | 14 | 4.5 | 111 | 81 |
| Comparative Example 13 | 23 | 0.901 | 11900 | 9 | 3.1 | 109 | 85 |
| Example 14 | 20 | 0.902 | 11900 | 13 | 3.3 | 105 | 84 |

According to the present invention, there is provided a thermoplastic resin composition obtainable by a process comprising mixing a heat-treated composition (1) obtainable by dynamically heat-treating a specific polypropylene and/or ethylene-propylene copolymer and an olefin copolymer rubber in the presence of an organic peroxide and a crosslinking agent, with a specified polypropylene and/or ethylene-propylene copolymer. Also provided is a composition prepared by incorporating an inorganic filler into the above-described thermoplastic resin composition. These compositions are superior in mechanical properties, particularly, for example, flexural modulus, thermal rigidity resistance and impact resistance, and can be suitably used for home electric parts.

**Claims**

1.  A thermoplastic resin composition obtainable by a process comprising mixing:

    -   a heat-treated material (1) obtainable by dynamically heat-treating a mixture of (A) from 10 to 50% by weight of a crystalline propylene homopolymer and/or a crystalline ethylene-propylene block copolymer and (B) from 50 to 90% by weight of an olefin copolymer rubber, in the presence of an organic peroxide and a crosslinking agent, component (A) having a melt index measured according to JIS-K-6758 at 230°C of 0.5 to 10g/10min; the crystalline polymers having an isotactic pentad fraction of 0.90 or more or an isotactic pentad fraction of a propylene homopolymer portion of 0.90 or more; with
    -   (C) a crystalline propylene homopolymer and/or a crystalline ethylene-propylene block copolymer having a melt index measured according to JIS-K-6758 at 230°C of a propylene homopolymer portion of 30 to 150g/10min and an isotactic pentad fraction of a propylene homopolymer portion of 0.98 or more, wherein the final thermoplastic resin composition contains 10 to 40% by weight of the olefinic copolymer rubber (B);

        wherein the organic peroxide is present in an amount of from 0.01 to 1.0% by weight based on the total weight of the propylene homopolymer, the ethylene-propylene block copolymer (A) and the olefinic copolymer rubber (B); and
        wherein the crosslinking agent is present in an amount of from 0.01 to 5.0% by weight based on the total weight of the crystalline propylene homopolymer, the crystalline ethylene-propylene block copolymer (A) and the olefinic copolymer rubber (B).

2.  A thermoplastic resin composition according to claim 1, wherein the olefinic copolymer rubber (B) is an ethylene-$\alpha$-olefin copolymer or an ethylene-$\alpha$-olefin-non-conjugated polyene terpolymer having an ethylene content of 90 to 40% by weight, an $\alpha$-olefin content of 10 to 60% by weight, a non-conjugated polyene content of 0 to 12% by weight and a Mooney viscosity ($ML_{1+4}$ 100°C) of 10 to 100.

3.  A thermoplastic resin composition according to claim 2, wherein the $\alpha$-olefin is propylene or butene-1.

4.  A thermoplastic resin composition according to any one of the preceding claims, wherein the mixture of (A) and (B) contains 20 to 40% by weight of (A) and 60 to 80% by weight of (B) based on the mixture.

5.  A thermoplastic resin composition obtainable by blending an inorganic filler (D) with a thermoplastic resin composition according to any one of the preceding claims.

6.  A composition according to claim 5 obtainable by blending from 5 to 40% by weight of (D) with from 95 to 60% by weight of a composition according to any one of claims 1 to 4.

7.  Shaped articles comprising a composition according to any one of the preceding claims.

8.  A domestic electrical appliance or part thereof comprising a composition as claimed in any one of claims 1 to 6.

**Patentansprüche**

1.  Thermoplastische Kunstharz-Zusammensetzung, herstellbar nach einem Verfahren, in dem gemischt werden:

    -   ein wärmebehandeltes Material (1), das durch dynamische Wärmebehandlung eines Gemisches aus (A) 10 bis 50 Masseprozent kristallinem Propylenhomopolymer und/oder kristallinem Ethylen-Propylen-Blockcopolymer und aus (B) 50 bis 90 Masseprozent Olefincopolymerkautschuk in Gegenwart eines organischen Peroxids und eines Vernetzungsmittels herstellbar ist, wobei die Komponente (A) einen nach JIS-K-6758 bei 230 °C gemessenen Schmelzindex von 0,5 bis 10 g / 10 min hat und die kristallinen Polymere einen Anteil von isotaktischen fünfwertigen Atomgruppen von 0,90 oder mehr oder einen Anteil von isotaktischen fünfwertigen Atomgruppen am Propylenhomopolymer-Teil von 0,90 oder mehr haben,
    -   (C) ein kristallines Propylenhomopolymer und/oder ein kristallines Ethylen-Propylen-Blockcopolymer, das einen nach JIS-K-6758 bei 230 °C gemessenen Schmelzindex des Propylenhomopolymer-Teils von 30 bis 150 g / 10 min und einen Anteil von isotaktischen fünfwertigen Atomgruppen am Propylenhomopolymer-Teil von 0,98 oder mehr hat, wobei die fertige thermoplastische Kunstharz-Zusammensetzung 10 bis 40 Masseprozent Olefincopolymerkautschuk (B) enthält,

dadurch gekennzeichnet, dass das organische Peroxid in einer Menge von 0,01 bis 1,0 Masseprozent bezogen auf die Gesamtmasse des Propylenhomopolymers, Ethylen-Propylen-Blockcopolymers (A) und Olefincopolymerkautschuks (B) vorliegt, und

dass das Vernetzungsmittel in einer Menge von 0,01 bis 5,0 Masseprozent bezogen auf die Gesamtmasse des kristallinen Propylenhomopolymers, des kristallinen Ethylen-Propylen-Blockcopolymers (A) und des Olefincopolymerkautschuks (B) vorliegt.

**2.** Thermoplastische Kunstharz-Zusammensetzung nach Anspruch 1, dadurch gekennzeichnet, dass der Olefincopolymerkautschuk (B) ein Copolymer aus Ethylen und $\alpha$-Olefin oder ein Terpolymer aus Ethylen, $\alpha$-Olefin und nichtkonjugiertem Polyen ist, das einen Ethylengehalt von 90 bis 40 Masseprozent, einen $\alpha$-Olefin-Gehalt von 10 bis 60 Masseprozent, einen Gehalt an nichtkonjugiertem Polyen von 0 bis 12 Masseprozent und eine Mooney-Viskosität ($ML_{1+4}$, 100 °C) von 10 bis 100 hat.

**3.** Thermoplastische Kunstharz-Zusammensetzung nach Anspruch 2, dadurch gekennzeichnet, dass das $\alpha$-Olefin Propylen oder Buten-1 ist.

**4.** Thermoplastische Kunstharz-Zusammensetzung nach einem der vorhergehenden Ansprüche, dadurch gekennzeichnet, dass das Gemisch aus (A) und (B) 20 bis 40 Masseprozent (A) und 60 bis 80 Masseprozent (B) bezogen auf das Gemisch enthält.

**5.** Thermoplastische Kunstharz-Zusammensetzung, herstellbar durch Mischen eines anorganischen Füllstoffs (D) mit einer thermoplastischen Kunstharz-Zusammensetzung nach einem der vorhergehenden Ansprüche.

**6.** Thermoplastische Kunstharz-Zusammensetzung nach Anspruch 5, herstellbar durch Mischen von 5 bis 40 Masseprozent (D) mit 95 bis 60 Masseprozent einer Zusammensetzung nach einem der Ansprüche 1 bis 4.

**7.** Formteile, die eine Zusammensetzung nach einem der vorhergehenden Ansprüche aufweisen.

**8.** Ein elektrisches Haushaltsgerät oder ein Teil davon, das eine Zusammensetzung nach einem der Ansprüche 1 bis 6 aufweist.

**Revendications**

**1.** Composition de résine thermoplastique qui peut être obtenue par un procédé comprenant de mélanger :

- un matériau traité à chaud (1) qui peut être obtenu en traitant à chaud dans des conditions dynamiques un mélange (A) de 10 à 50 % en poids d'un homopolymère cristallin du propylène et / ou d'un copolymère bloc cristallin de l'éthylène et du propylène et (B) de 50 à 90 % en poids d'un caoutchouc de type copolymère oléfinique en présence d'un peroxyde organique et d'un agent de réticulation, le composant (A) ayant un indice de fluage de 0,5 à 10 g / 10 min., la mesure étant faite selon JIS-K-6758 à 230 °C ; les polymères cristallins ayant une fraction de pentades isotactiques de 0,90 ou plus ou une fraction de pentades isotactiques dans la portion d'homopolymère du propylène de 0,90 ou plus ; avec
- (C) un homopolymère cristallin du propylène et / ou un copolymère cristallin bloc de l'éthylène et du propylène ayant un indice de fluage mesuré selon JIS-K-6758 à 230 °C pour la portion d'homopolymère du propylène de 30 à 150 g / 10 min. et une fraction de pentades isotactiques dans la portion d'homopolymère du propylène de 0,98 ou plus ;

où la composition de résine thermoplastique finale contient de 10 à 40 % en poids du caoutchouc de type copolymère oléfinique (B) ;
où le peroxyde organique est présent à raison de 0,01 à 1,0 % en poids sur la base du poids total de l'homopolymère du propylène, du copolymère bloc de l'éthylène et du propylène (A) et du caoutchouc de type copolymère oléfinique (B) ; et
où l'agent de réticulation est présent à raison de 0,01 à 5,0 % en poids sur la base du poids total de l'homopolymère de propylène cristallin, du copolymère bloc cristallin de l'éthylène et du propylène (A) et du caoutchouc de type copolymère oléfinique (B).

**2.** Composition de résine thermoplastique selon la revendication 1, dans laquelle le caoutchouc de type copolymère oléfinique (B) est un copolymère de l'éthylène et d'une $\alpha$-oléfine ou un terpolymère de l'éthylène, d'une $\alpha$-oléfine et d'un polyène non conjugué ayant une teneur en éthylène de 90 à 40 % en poids, une teneur en $\alpha$-oléfine de 10 à 60 % en poids, une teneur en polyène non conjugué de 0 à 12 % en poids et une viscosité de Mooney (ML$_{1+4}$ 100 °C) de 10 à 100.

**3.** Composition de résine thermoplastique selon la revendication 2, dans laquelle l'$\alpha$-oléfine est le propylène ou le 1-butène.

**4.** Composition de résine thermoplastique selon l'une quelconque des revendications précédentes, dans laquelle le mélange de (A) et de (B) contient de 20 à 40 % en poids de (A) et de 60 à 80 % en poids de (B), sur la base du mélange.

**5.** Composition de résine thermoplastique, qui peut être obtenue en mélangeant une charge inorganique (D) avec une composition de résine thermoplastique selon l'une quelconque des revendications précédentes.

**6.** Composition selon la revendication 5, qui peut être obtenue en mélangeant de 5 à 40 % en poids de (D) avec 95 à 60 % en poids d'une composition selon l'une quelconque des revendications 1 à 4.

**7.** Articles formés comprenant une composition selon l'une quelconque des revendications précédentes.

**8.** Composant électrique pour usage domestique ou partie de ce composant, comprenant une composition selon l'une quelconque des revendications 1 à 6.